# EUROPÄISCHE PATENTSCHRIFT

(11) **EP 3 153 732 B1**
(45) Veröffentlichungstag und Bekanntmachung des Hinweises auf die Patenterteilung: **07.06.2023**
(21) Anmeldenummer: 16190642.5
(22) Anmeldetag: 26.09.2016
(51) Int. Cl.: F16D 23/02

(54) **REIBRING FÜR EINE SYNCHRONISIERUNGSEINHEIT**
FRICTION RING FOR A SYNCHRONIZING UNIT
ANNEAU DE FRICTION POUR UNE UNITÉ DE SYNCHRONISATION

(30) Priorität: 07.10.2015 EP 15188810
(43) Veröffentlichungstag der Anmeldung: 12.04.2017
(73) Patentinhaber: Oerlikon Friction Systems (Germany) GmbH, 28719 Bremen (DE)
(72) Erfinder: Christoffer, Ulf, 28719 Bremen (DE); Koester, Dietmar, 28213 Bremen (DE); Spreckels, Marcus Dr., 28832 Oyten (DE)
(74) Vertreter: IPS Irsch AG

(56) Entgegenhaltungen:
- EP-A1- 1 199 489
- EP-A2- 2 894 363
- EP-A2- 3 109 498

## Beschreibung

Die Erfindung betrifft einen Reibring für eine Synchronisierungseinheit eines schaltbaren Zahnräderwechselgetriebes gemäss dem unabhängigen Anspruch 1. Die Erfindung betrifft weiter eine Synchronisierungseinheit mit einem Reibring gemäss dem unabhängigen Anspruch 1.

Reibringe dienen in Synchronisierungseinheiten eines mechanischen schaltbaren Zahnräderwechselgetriebes, z.B. in Fahrzeuggetrieben dazu, die während eines Gangwechsels auftretenden Relativgeschwindigkeiten zwischen Gangrad und Getriebewelle aneinander anzugleichen. Die Synchronisation wird dabei durch Reibung zwischen den entsprechenden Reibpartnern erzielt. Die Funktionsweise solcher Getriebe und der Ablauf des Synchronisationsvorgangs sind an sich bekannt und brauchen dem Fachmann hier nicht mehr näher erläutert zu werden. Auch sind Reibringe von Synchronisierungseinheiten bzw. andere Komponenten von Synchronisierungseinheiten im Stand der Technik vielfältig und ausführlich beschrieben.

So ist z.B in der EP 2 894 363 A1 ein gattungsgemässer Reibring gezeigt. Der Reibring umfasst einen konusförmigen Reibringkörper mit einer inneren Reibfläche und einer äusseren Einbaufläche. Die innere Reibfläche erstreckt sich dabei unter einem vorgebbaren Reibwinkel und die äussere Einbaufläche unter einem vorgebbaren Einbauwinkel konisch entlang einer Reibringachse.

Der Reibwinkel und der Einbauwinkel sind unterschiedlich ausgebildet, wodurch eine unabhängige Optimierung der Funktion "Synchronisieren" und "Trennen" ermöglicht wird. Der Reibringkörper ist als ein segmentierter Reibringkörper ausgebildet, der eine Mehrzahl von separaten Reibringsegmenten umfasst, die in einer ringförmigen Anordnung den Reibringkörper bilden. Auch ist in der EP 2 894 363 A1 ein Reibringkörper gezeigt, der anstatt aus einer Mehrzahl von separaten Reibringsegmenten aus einem einzigen Segment besteht. Der Reibringkörper weist dabei einen Schlitz auf, der senkrecht zur Reibringachse ausgebildet ist.

Ein weiterer Stand der Technik wird gegeben durch Dokument EP1199489A1, welches einen Konusring offenbart, der über eine Aussenreibfläche und eine Innenreibfläche mit einem Aussensynchronring beziehungsweise einem Innensynchronring, die mit einer Getriebewelle gekoppelt sind, in Berührung steht. Der Konusring ist dabei so ausgestaltet, dass die Reibungsbelastung an der Aussenreibfläche und der Innenreibfläche in etwa gleich gross ist. Dies kann durch eine Unterbrechung des Umfangs des Konusringes erreicht werden, so dass er durch Erwärmung radial geweitet oder gestaucht werden und somit radialen Belastungen nachgeben kann, bis sie an der Aussenreibfläche und Innenreibfläche in gleicher Grösse auftreten.

Ein weiteres Beispiel für einen Reibring für eine Synchronisierungseinheit ist aus der EP 1 199 489 A1 bekannt.

Ferner offenbart die Veröffentlichung EP 3 109 498 A2, die gemäß Art. 54(3) EPÜ als Stand der Technik gilt, einen Reibring für eine Synchronisiereinheit, bei dem sich die beiden Enden des Reibrings in unbelastetem Zustand berühren und die Vorspannung im Bereich von 4 bis 5 N liegt.

Im Einbauzustand ist der Reibring über einen Formschluss mit einem konusförmigen Synchronring verbunden. Der Synchronring weist hierzu eine konische innere Einbaufläche auf, welche korrespondierend zur äusseren Einbaufläche des Reibrings ausgebildet ist. Der Reibring ist über die konische innere Einbaufläche des Synchronrings in axialer und radialer Richtung zur Reibringachse gesichert. Zudem weist der Reibring Verdrehsicherungen auf, über welche der Reibring mit dem Synchronring im wesentlichen auch drehfest verankert ist, d.h der Reibring ist bis auf kleine Winkelauslenkungen in einer um die Reibringachse verlaufenden Umfangsrichtung drehfest mit dem Synchronring verbunden.

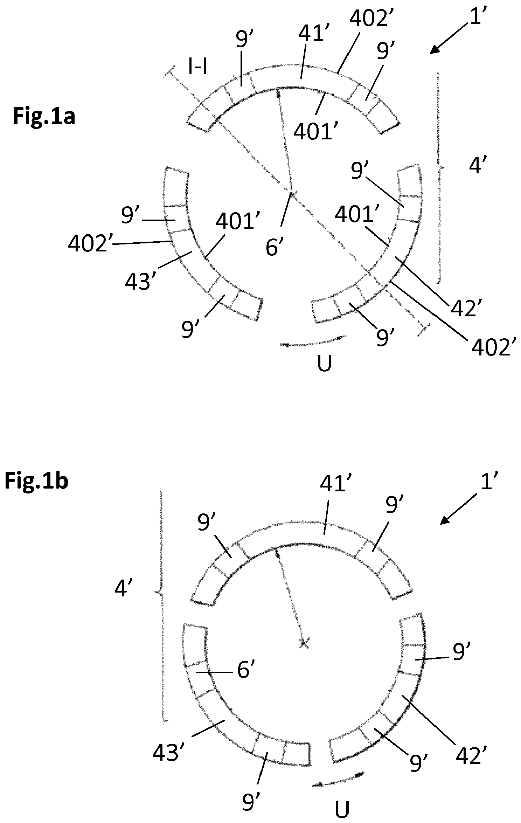

Zur Erläuterung dieses Reibrings wird im Folgenden auf die schematischen Fig.1a bis Fig.2 Bezug genommen, anhand derer der zuvor beschriebene Stand der Technik etwas näher beschrieben wird. Zur Unterscheidung des Stands der Technik von der vorliegenden Erfindung sind die Bezugszeichen, die sich auf Merkmale von bekannten Beispielen beziehen mit einem Hochkomma versehen, während Merkmale erfindungsgemässer Ausführungsbeispiele mit Bezugszeichen versehen sind, die kein Hochkomma tragen.

Der Reibring wird im Folgenden gesamthaft mit dem Bezugszeichen 1', der Synchronring mit dem Bezugszeichen 2' und die Synchronisierungseinheit mit dem Bezugszeichen 3' bezeichnet.

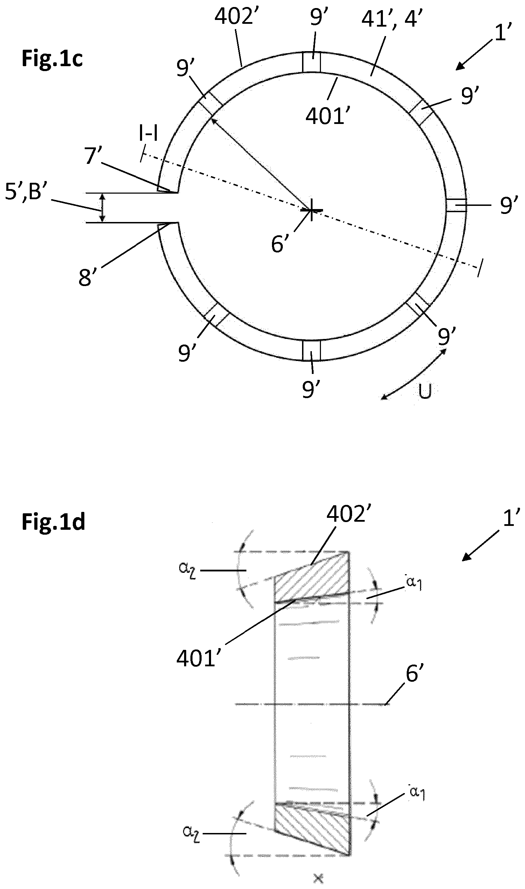

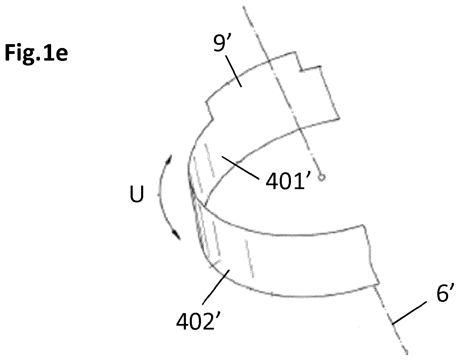

Die Fig. 1a und Fig. 1b zeigen in einer schematischen Darstellung ein und dasselbe Beispiel eines bekannten segmentierten Reibrings 1'. Fig. 1a zeigt den Reibring 1' mit segmentiertem Reibringkörper 4' dabei in einer expandierten Konfiguration, während Fig. 1b denselben Reibring 1' in einer zusammengezogenen Konfiguration zeigt. Fig. 1c zeigt ein zweites Beispiel eines bekannten segmentierten Reibrings 1'. Zum besseren Verständnis zeigt Fig. 1d einen Schnitt entlang der Schnittlinie I-I gemäss Fig. 1a bzw. Fig. 1c, während anhand der Fig. 1e ein Abschnitt des Reibrings 1 ` gemäss Fig. 1a bzw. Fig. 1c in perspektivischer Ansicht gezeigt ist.

Wie anhand der Fig. 1a und Fig. 1b deutlich zu erkennen ist, ist der Reibringkörper 4' in diesem Beispiel ein segmentierter Reibringkörper 4', der eine Mehrzahl von separaten Reibringsegmenten 41', 42', 43`, im vorliegenden Beispiel also drei Reibringsegmenten 41', 42', 43' umfasst, die in einer ringförmigen Anordnung den Reibringkörper 4' bilden. Wie anhand von Fig. 1c hervorgeht kann der Reibringkörper 4' anstatt aus mehreren separaten Reibringsegmenten auch aus einem einzigen Segment 41' bestehen. Der Reibringkörper 4'weist dabei eine einzige Trennstelle 5' in Form eines Schlitzes auf, der senkrecht zu einer Reibringachse 6`ausgebildet ist. Der Schlitz hat eine Breite B'. Aufgrund des Schlitzes sind eine erste Trennfläche 7' und eine zweite Trennfläche 8' des Reibringkörpers 4`in einem Abstand zueinander angeordnet.

Gemäss Fig. 1d umfasst der Reibring 1' einen konischen Reibringkörper 4' mit einer inneren Reibfläche 401'und einer äusseren Einbaufläche 402', die den Reibringkörper 4' in einer senkrecht zur axialen Reibringachse 6' verlaufenden radialen Richtung jeweils begrenzen. Dabei erstreckt sich die innere Reibfläche 401' unter einem vorgebbaren Reibwinkel α₁ und die äussere Einbaufläche 402' unter einem vorgebbaren Einbauwinkel α₂ jeweils konisch entlang der Reibringachse 6'. Der Der Reibwinkel α₁ und der Einbauwinkel α₂ sind unterschiedlich ausgebildet, wodurch eine unabhängige Optimierung der Funktion "Synchronisieren" und "Trennen" ermöglicht wird.

Wie aus Fig. 1e hervorgeht, sind am Reibringkörper 4' eine Mehrzahl von Verdrehsicherungen 9' bzw. Laschen vorgesehen, die sich entlang der Reibringachse 6' erstrecken. Die Verdrehsicherungen 9' sind in Umfangsrichtung U am Reibringkörper 4' angeordnet und greifen im Einbauzustand in am Synchronring 2' vorgesehene korrespondierende Taschen. Über die Verdrehsicherungen 9' ist der Reibring 1' mit dem Synchronring 2' im Wesentlichen drehfest verankert.

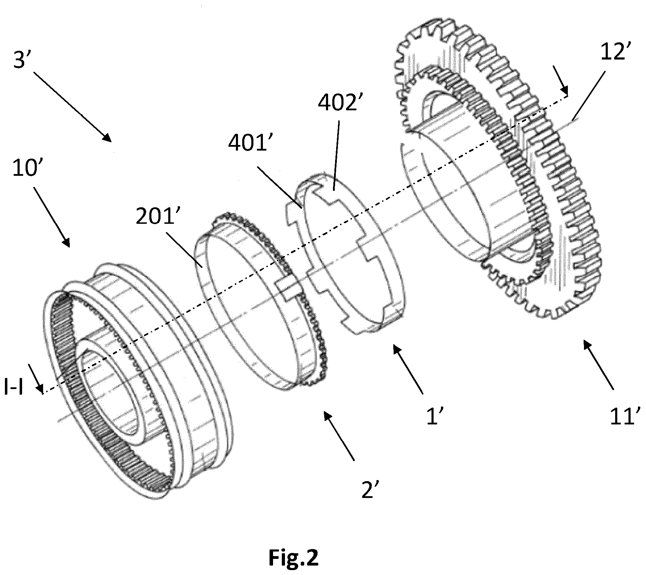

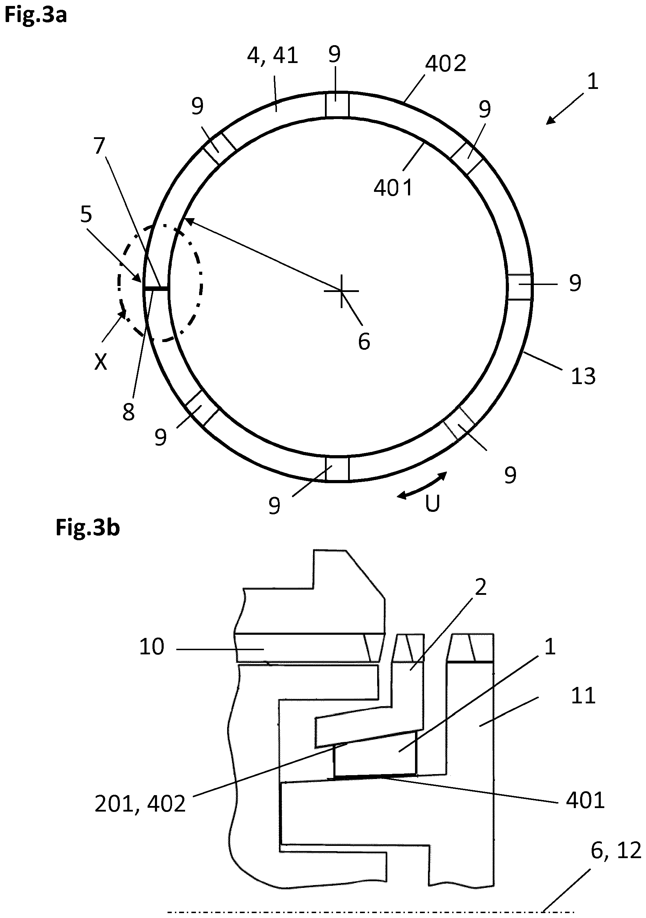

Fig. 2 zeigt eine Explosionsdarstellung einer bekannten Synchronisierungseinheit 3'umfassend einen Reibring 1'und einen Synchronring 2'. Gemäss Fig. 3 umfasst die Synchronisierungseinheit 3' neben dem Reibring 1' und dem Synchronring 2' in an sich bekannter Weise weiter eine Schiebemuffe 10', sowie ein Gangrad 11', wobei die vorgenannten Komponenten derart koaxial zu einer Achse 12' der Synchronisierungseinheit 1' angeordnet sind, dass im Betriebszustand der Synchronring 2' durch die Schiebemuffe 10' gemeinsam mit dem Reibring 1' entlang der Achse 12' in Richtung zum Gangrad 11' verschiebbar ist, so dass die innere Reibfläche 401' des Reibringkörpers 4' mit dem Gangrad 11' in Eingriff bringbar ist.

Durch die Anwendung des beschriebenen segmentierten, geschlitzten Reibringes konnte in der Praxis schon einiges verbessert werden.

Aufgrund der Tatsache, dass der Reibring segmentiert ausgebildet ist, d.h mindestens einen Schlitz aufweist, ist ein Expandieren des Reibringes hin zu einem grösseren Umfang des Ringes möglich, was zur Vermeidung der Selbsthemmung an der inneren Reibfläche des Reibringes unabdingbar ist. Hierdurch konnte die Schaltqualität wesentlich verbessert werden.

Es hat sich aber auch gezeigt, dass selbst dieser verbesserte, und sich in der Praxis mittlerweile bewährte, Reibring noch Verbesserungspotential hat.

Ein wesentlicher Nachteil des geschlitzten Reibrings liegt darin, dass der Reibring aufgrund seiner Ausbildung in axialer Richtung relativ zum Synchronring nicht eindeutig positionierbar ist. Der Reibring kann mit geringen Kräften derart elastisch verformt werden, dass sich der Schlitz bis zum Berühren der beiden Trennflächen schliesst. Die damit vebundene Verkleinerung des Umfanges des Reibringkörpers hat zur Folge, dass der Reibring bei der Synchronisation relativ zum Synchronring eine unkontrollierte axiale Position einnimmt. Diese unkontrollierte axiale Position des Reibrings wirkt sich negativ auf den Synchronisationsvorgang und damit die Schaltqualität aus.

Dies hat eine ungleichmässige Beanspruchung und damit Abnutzung der äusseren Einbaufläche des Reibrings und der inneren Einbaufläche des Synchronrings zur Folge. Um dem so verursachten Verschleiss der Einbauflächen entgegenzuwirken, kann eine aufwändige, kostenintensive Beschichtung der Einbauflächen bzw. der Einsatz hochwertiger, teurer Werkstoffe notwendig sein.

Ein weiterer Nachteil der unkontrollierten axialen Positionierung des Reibrings relativ zum Synchronring bei der Synchronisation besteht darin, dass die Synchronisierungseinheit einer erhöhten mechanischen Belastung unterworfen ist. Diese kann sich z.B. in schädlichen Vibrationen oder erhöhten Schaltkräften äussern, und stört die Zuverlässigkeit und Genauigkeit der Synchronisation. Die genannten Effekte werden umso bedeutender, je höher das durch die Synchronisationseinheit zu übertragende Synchronisationsmoment ist.

Die Aufgabe der Erfindung ist es daher, einen weiter verbesserten Reibring für eine Synchronisierungseinheit vorzuschlagen, bei welchem der Reibring bei der Synchronisation relativ zum Synchronring in axialer Richtung ohne negative Auswirkungen auf die Selbsthemmung kontrolliert positioniert ist, so dass die aus dem Stand der Technik bekannten Nachteile weitgehend vermieden werden.

Die diese Aufgaben lösenden Gegenstände der Erfindung sind durch die Merkmale des unabhängigen Anspruchs 1 gekennzeichnet.

Die abhängigen Ansprüche beziehen sich auf besonders vorteilhafte Ausführungsformen der Erfindung.

Die Erfindung betrifft somit einen Reibring für eine Synchronisierungseinheit eines Zahnräderwechselgetriebes, umfassend einen konischen Reibringkörper mit einer inneren Reibfläche und einer äusseren Einbaufläche, die den Reibringkörper in einer senkrecht zu einer axialen Reibringachse verlaufenden radialen Richtung jeweils begrenzen. Die innere Reibfläche erstreckt sich dabei unter einem vorgebbaren Reibwinkel und die äussere Einbaufläche unter einem vorgebbaren Einbauwinkel konisch entlang der Reibringachse. Der Reibringkörper ist in einer um die Reibringachse verlaufenden Umfangsrichtung durch eine Trennstelle derart unterbrochen, dass an der Trennstelle eine erste Trennfläche und eine zweite Trennfläche ausgebildet sind.

Erfindungsgemäss berühren sich bei dem Reibring die erste Trennfläche und die zweite Trennfläche in einem vorgebbaren Bereich derart, dass der Reibringkörper in Form einer in Umfangsrichtung geschlossenen Kontur mit einem kleinsten Umfang bzw. kleinsten Durchmesser ausgebildet ist. Unter dem Begriff "geschlossene Kontur" ist zu verstehen, dass der Reibringkörper in Form eines in Umfangsrichtung geschlossenen Ringes ausgebildet ist.

Dies bedeutet, dass sich im Rahmen dieser Erfindung der Reibring nur in Richtung eines grösseren Umfangs bzw. grösseren Durchmessers elastisch verformen kann. Dies ist der Unterschied zum Stand der Technik, wo sich der segmentierte Reibring unter Krafteinwirkung auch in Richtung eines kleineren Umfangs bzw. kleineren Durchmessers elastisch verformen kann.

Ein wesentlicher Vorteil des erfindungsgemässen Reibrings liegt darin, dass der Reibring aufgrund seiner Ausbildung relativ zum Synchronring in axialer Richtung eindeutig positionierbar ist. Da sich die erste Trennfläche und die zweite Trennfläche erfindungsgemäss berühren, d.h die Schlitzbreite 0mm beträgt, kann sich der Umfang des Reibrings im Unterschied zum Stand der Technik nicht mehr elastisch in Richtung eines kleineren Umfangs verformen. Dies hat zur Folge, dass der Reibring relativ zum Synchronring eine kontrollierte axiale Position bei der Synchronisation einnimmt, was sich positiv auf den Synchronisationsvorgang und damit die Schaltqualität auswirkt.

Infolgedessen werden die äussere Einbaufläche des Reibrings und die innere Einbaufläche des Synchronrings gleichmässiger beansprucht und sind damit einem geringeren Verschleiss unterworfen. Darüber hinaus wird auch die gesamte Synchronisierungseinheit einer geringeren mechanischen Belastung ausgesetzt.

Da der Reibring eine Trennstelle aufweist, ist ein Expandieren des Reibringes hin zu einem grösseren Umfang des Ringes möglich. Hierdurch wird wie schon beim aus dem Stand der Technik bekannten Reibring die Selbsthemmung an der inneren Reibfläche des Reibringes vermieden.

In einem bevorzugten Ausführungsbeispiel berühren sich die erste Trennfläche und die zweite Trennfläche unter einer Umfangsvorspannung. Unter dem Begriff "Umfangsvorspannung" ist im Rahmen dieser Anmeldung zu verstehen, dass der Reibringkörper in Umfangsrichtung belastet bzw. vorgespannt ist. Aufgrund der "Umfangsvorspannung" ist sichergestellt, dass sich die erste Trennfläche und die zweite Trennfläche in einem vorgebbaren Bereich zuverlässig berühren und der Reibring in Umfangsrichtung nur in Richtung eines grösseren Umfangs elastisch verformbar ist. Ein solches Berühren der beiden Trennflächen unter "Umfangsvorspannung" kann z.B folgendermassen erzielt werden: Es können in die äussere Einbaufläche Druckspannungen bzw. Druckeigenspannungen eingebracht werden, z.B durch thermische Behandlung oder mechanische Bestrahlung des Reibringkörpers. Ein Scheren oder Brechen vermindert die notwendigen Eigenspannungen, da kein Spalt geschlossen werden muss. Erfindungsgemäß, ist die "Umfangsvorspannung" derart ausgebildet, dass auf die beiden Trennflächen jeweils eine Kraft zwischen 2 N - < 4 N und > 5 N - 20 N wirkt. Hierdurch ist auch bei unvermeidlicher Krafteinwirkung auf den Reibring, wie z.B durch Fliehkräfte, gewährleistet, dass sich die erste Trennfläche und die zweite Trennfläche zuverlässig berühren.

In einem für die Praxis sehr wichtigen Ausführungsbeispiel ist der Reibringkörper in Umfangsrichtung derart elastisch verformbar, dass ein Umfang des Reibrings in Bezug auf den kleinsten Umfang vergrösserbar ist. Der Reibring kann hierdurch zu einem grösseren Umfang expandieren, so dass die Selbsthemmung an der inneren Reibfläche des Reibringes vermieden wird.

Auch hat es sich als vorteilhaft herausgestellt, wenn die Trennstelle unter einem vorgebbaren Trennwinkel zur Umfangsrichtung verläuft. Bevorzugt, aber nicht notwendig, kann die Trennstelle dabei orthogonal zur Umfangsrichtung verlaufen. Hierdurch wird die Herstellung des Reibrings einfach und günstig.

In einem für die Praxis weiteren sehr wichtigen Ausführungsbeispiel ist die erste Trennfläche in Form eines ersten Profils und die zweite Trennfläche in Form eines zweiten Profils derart ausgebildet, dass das erste Profil und das zweite Profil so ineinandergreifen, dass die erste Trennfläche und die zweite Trennfläche in Richtung der Reibringachse im Wesentlichen nicht gegeneinander verschiebbar sind. Dies bedeutet, dass die Trennstelle nicht als eine gerade Linie ausgeführt ist. Unter dem Begriff "im Wesentlichen" ist zu verstehen, dass die erste Trennfläche und die zweite Trennfläche bis auf kleine Verschiebungen in axialer Richtung nicht gegeneinander bewegbar sind.

Hierbei hat es sich als vorteilhaft herausgestellt, wenn das erste Profil und das korrespondierende zweite Profil derart in Form eines Trennschlosses ausgebildet sind, dass der Umfang des Reibrings in Bezug auf den kleinsten Umfang auf einen vorgebbaren maximalen Umfang durch das Trennschloss begrenzt ist. D.h, der Reibring kann sich aufgrund des Trennschlosses in Umfangsrichtung nur bis zu einem bestimmten Umfang elastisch verformen.

Das erste Profil und das zweite Profil können auf verschiedene Art und Weise ausgebildet sein, wobei sich in der Praxis die Folgenden Ausführungsbeispiele als vorteilhaft herausgestellt haben.

Als besonders vorteilhaft hat es sich erwiesen, wenn das erste Profil als eine rechteckige Erhöhung und das zweite Profil als eine rechteckige Vertiefung ausgebildet sind. Auch ist es aber möglich, das erste Profil als eine schwalbenschwanzförmige Erhöhung und das zweite Profil als eine schwalbenschwanzförmige Vertiefung auszubilden. Denkbar wäre es auch das erste Profil in Form einer pfeilspitzförmigen Erhöhung und das zweite Profil in Form einer pfeilspitzförmigen Vertiefung auszubilden. Die Ausbildung des ersten Profils und des zweiten Profils kann auch dergestalt sein, dass das erste Profil eine konvexe Erhöhung und das zweite Profil eine konkave Vertiefung darstellt. Darüber hinaus kann das erste Profil auch als eine kreisförmige Erhöhung und das zweite Profil als eine kreisförmige Vertiefung ausgeführt sein.

Zudem hat es sich als vorteilhaft herausgestellt, wenn am Reibring an der Reibfläche eine Beschichtung, insbesondere eine Reibbeschichtung, vorgesehen ist. Die Reibbeschichtung kann dabei z.B in Form eines Karbon Reibbelags ausgeführt sein.

Der Reibring ist vorteilhafterweise ein Stahlstanzteil oder ein Blechumformteil. Hierdurch wird die Herstellung des Reibrings einfach und günstig.

Der erfindungsgemässe Reibring findet Anwendung in einer Synchronisierungseinheit eines Zahnräderwechselgetriebes für ein Fahrzeug, insbesondere für einen Personenkraftwagen, einen Transporter oder eine Lastkraftwagen.

Im folgenden wird die Erfindung anhand der schematischen Zeichnungen näher erläutert. Es zeigen:
- Fig. 1a: ein erstes Beispiel eines bekannten segmentierten Reibrings bestehend aus mehreren Segmenten in einer expandierten Konfiguration,
- Fig. 1b: den Reibring gemäss Fig. 1a in einer zusammengezogenen Konfiguration,
- Fig. 1c: ein zweites Beispiel eines bekannten segmentierten Reibrings bestehend aus einem einzigen Segment,
- Fig. 1d: einen Schnitt entlang der Schnittlinie I-I gemäss Fig. 1a und Fig.1c,
- Fig. 1e: einen Abschnitt des Rebrings gemäss Fig. 1a und Fig. 1c in perspektivischer Ansicht,
- Fig. 2: eine aus dem Stand der Technik bekannte Synchronisierungseinheit,
- Fig. 3a: ein erstes Ausführungsbeispiel eines erfindungsgemässen Reibrings,
- Fig. 3b :: einen Schnitt entlang der Schnittlinie I-I gemäss Fig. 2 mit einem Reibring nach Fig.3a,
- Fig. 4a :: eine Detailansicht X nach Fig. 3a,
- Fig. 4b :: eine Detailansicht X nach Fig. 3a eines zweiten Ausführungsbeispiels eines erfindungsgemässen Reibrings,
- Fig. 4c :: eine Detailansicht X nach Fig. 3a eines dritten Ausführungsbeispiels eines erfindungsgemässen Reibrings,
- Fig. 4d :: eine Detailansicht X nach Fig. 3a eines vierten Ausführungsbeispiels eines erfindungsgemässen Reibrings,
- Fig. 4e :: eine Detailansicht X nach Fig. 3a eines fünften Ausführungsbeispiels eines erfindungsgemässen Reibrings und
- Fig. 4f:: eine Detailansicht X nach Fig. 3a eines sechsten Ausführungsbeispiels eines erfindungsgemässen Reibrings.

Wie bereits erwähnt, zeigen die Fig. 1a bis Fig.2 den Stand der Technik und wurden bereits eingangs eingehend erläutert, so dass hier auf eine weitere Diskussion verzichtet werden kann.

Fig. 3a zeigt ein erstes Ausführungsbeispiel eines erfindungsgemässen Reibrings, der im Folgenden gesamthaft mit dem Bezugszeichen 1 bezeichnet wird. Die in den Fig. 3a bis Fig. 4f verwendeten Bezugszeichen tragen dabei kein Hochkomma, da sich diese Figuren auf Ausführungsbeispiele der vorliegenden Erfindung beziehen. Wie bereits oben erwähnt, tragen nur die Bezugszeichen der Fig. 1a bis Fig. 2 ein Hochkomma, da diese sich auf den bekannten Stand der Technik beziehen.

Der Reibring 1 umfasst einen konischen Reibringkörper 4 mit einer inneren Reibfläche 401 und einer äusseren Einbaufläche 402, die den Reibringkörper 4 in einer senkrecht zu einer axialen Reibringachse 6 verlaufenden radialen Richtung jeweils begrenzen. Wie beim bekannten Reibring aus Fig. 1d erstreckt sich die innere Reibfläche 401 unter einem vorgebbaren Reibwinkel α₁ und die äussere Einbaufläche unter einem vorgebbaren Einbauwinkel α₂ konisch entlang der Reibringachse 6. Der vorgebbare Reibwinkel α₁ und der vorgebbare Einbauwinkel α₂ sind dabei unterschiedlich ausgebildet. Der Reibringkörper 4 ist in einer um die Reibringachse 6 verlaufenden Umfangsrichtung U durch eine Trennstelle 5 derart unterbrochen, dass an der Trennstelle 5 eine erste Trennfläche 7 und eine zweite Trennfläche 8 ausgebildet sind. Die Trennstelle 5 verläuft dabei orthogonal zur Umfangsrichtung U. Im Unterschied zum bekannten Reibring aus Fig. 1c berühren sich die erste Trennfläche 7 und die zweite Trennfläche 8 derart, dass der Reibringkörper 4 in Form eines in Umfangsrichtung U geschlossenen Ringes mit einem kleinsten Umfang 13 bzw. kleinsten Durchmesser ausgebildet ist. Der Reibring 1 kann sich dadurch unter Krafteinwirkung nur in Richtung eines grösseren Umfangs bzw. grösseren Durchmessers elastisch verformen, so dass die Selbsthemmung an der inneren Reibfläche 401 des Reibringes 1 vermieden wird.

Wie aus Fig. 3b hervorgeht, ist der Reibring 1 aufgrund dieser Ausbildung innerhalb der Synchronisierungseinheit 3 relativ zum Synchronring 2 in axialer Richtung eindeutig positionierbar. Da sich die erste Trennfläche 7 und die zweite Trennfläche 8 berühren, kann sich der Umfang des Reibrings 1 nicht mehr elastisch in Richtung eines kleineren Umfangs bzw. kleineren Durchmessers verformen. Bei der Synchronisation nimmt der Reibring 1 daher relativ zum Synchronring 2 eine kontrollierte axiale Position ein.

Erfindungsgemäß, berühren sich beim Reibring 1 aus Fig. 3a die erste Trennfläche 7 und die zweite Trennfläche 8 unter einer Umfangsvorspannung 14, d.h der Reibringkörper 4 ist in Umfangsrichtung U belastet bzw. vorgespannt. Die auf die beiden Trennflächen 7, 8 wirkende Kraft beträgt dabei erfindungsgemäß zwischen 2 N - < 4 N und > 5 N - 20 N. Hierdurch ist gewährleistet, dass auch bei unvermeidlicher Krafteinwirkung auf den Reibring 1, wie z.B durch Fliehkräfte, sich die erste Trennfläche 7 und die zweite Trennfläche 8 zuverlässig berühren.

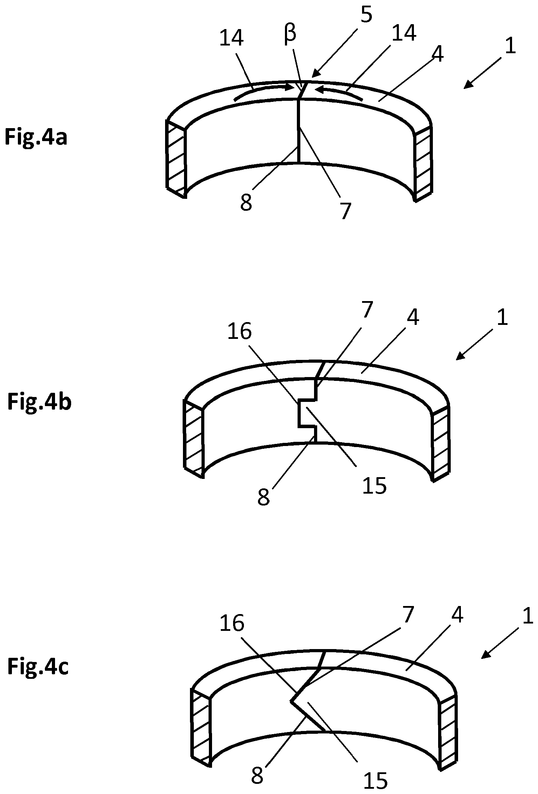

Fig.4a bis Fig.4f zeigen jeweils eine Detailansicht X nach Fig. 3a. Fig.4b bis Fig.4f zeigen dabei weitere Ausführungsbeispiele eines erfindungsgemässen Reibrings 1.

Bei den Ausführungsbeispielen des Reibringes 1 nach Fig.4b bis Fig.4f ist die erste Trennfläche 7 in Form eines ersten Profils 15 und die zweite Trennfläche in Form eines korrespondierenden zweiten Profils 16 ausgebildet, d.h im Unterschied zum Ausführungsbeispiel aus Fig. 3a ist die Trennstelle 5 nicht als eine gerade Linie ausgeführt. Das erste Profil 15 und das zweite Profil 16 greifen derart ineinander, dass die erste Trennfläche 7 und die zweite Trennfläche 8 in Richtung der Reibringachse 6, d.h in axialer Richtung, im Wesentlichen nicht gegeneinander verschiebbar sind.

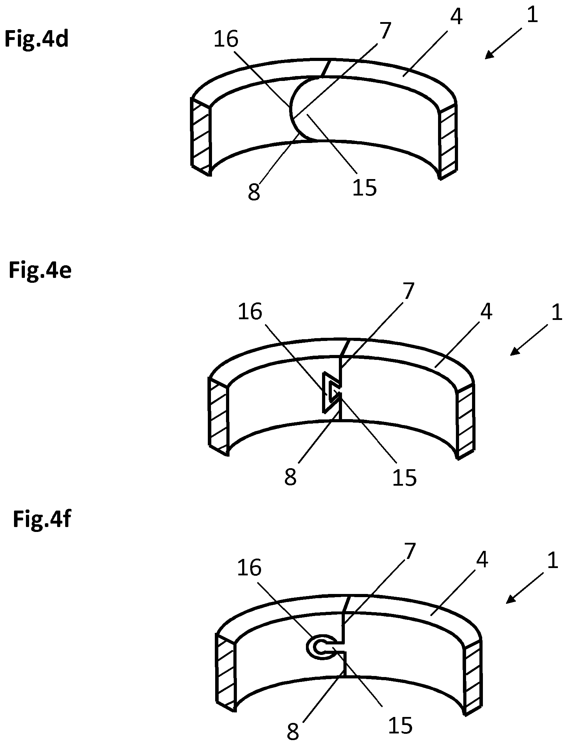

Beim Ausführungsbeispiel aus Fig. 4b ist das erste Profil 15 als eine rechteckige Erhöhung und das zweite Profil 16 als eine rechteckige Vertiefung ausgebildet. Fig. 4c zeigt ein Ausführungsbeispiel, bei welchem das erste Profil 15 in Form einer pfeilspitzförmigen Erhöhung und das zweite Profil 16 in Form einer pfeilspitzförmigen Vertiefung ausgebildet ist. Fig. 4d zeigt dagegen ein Ausführungsbeispiel, bei welchem das erste Profil 15 eine konvexe Erhöhung und das zweite Profil 16 eine konkave Vertiefung darstellt.

Fig.4e und Fig.4f zeigen ein Ausführungsbeispiel, bei welchem das erste Profil 15 und das korrespondierende zweite Profil 16 derart in Form eines Trennschlosses ausgebildet sind, dass der Umfang des Reibrings 1 in Bezug auf den kleinsten Umfang 13 auf einen vorgebbaren maximalen Umfang durch das Trennschloss begrenzt ist. D.h, der Reibring 1 kann sich aufgrund des Trennschlosses in Umfangsrichtung U nur bis zu einem bestimmten Umfang elastisch verformen. Beim Ausführungsbeispiel aus Fig. 4e ist das erste Profil 15 als eine schwalbenschwanzförmige Erhöhung und das zweite Profil 16 als eine schwalbenschwanzförmige Vertiefung ausgebildet. Fig. 4f zeigt ein Ausführungsbeispiel, bei welchem das erste Profil 15 als eine kreisförmige Erhöhung und das zweite Profil 16 als eine kreisförmige Vertiefung ausgeführt ist.

Aus den Fig. 4a bis Fig.4f ist deutlich ersichtlich, dass sich die erste Trennfläche 7 und die zweite Trennfläche 8 in einem Bereich berühren. Bei allen Ausführungsbeispielen kann sich dadurch der Umfang des Reibrings 1 nicht mehr elastisch in Richtung eines kleineren Umfangs bzw. kleineren Durchmessers verformen, so dass bei der Synchronisation der Reibring 1 relativ zum Synchronring 2 eine kontrollierte axiale Position einnimmt.

## Patentansprüche

1. Reibring (1) für eine Synchronisierungseinheit (3) eines Zahnräderwechselgetriebes, umfassend einen konischen Reibringkörper (4) mit einer inneren Reibfläche (401) und einer äusseren Einbaufläche (402), die den Reibringkörper (4) in einer senkrecht zu einer axialen Reibringachse (6) verlaufenden radialen Richtung jeweils begrenzen, wobei sich die innere Reibfläche (401) unter einem vorgebbaren Reibwinkel (α₁) und die äussere Einbaufläche (402) unter einem vorgebbaren Einbauwinkel (α₂) konisch entlang der Reibringachse (6) erstrecken, und der Reibringkörper (4) in einer um die Reibringachse (6) verlaufenden Umfangsrichtung (U) durch eine Trennstelle (5) derart unterbrochen ist, dass an der Trennstelle (5) eine erste Trennfläche (7) und eine zweite Trennfläche (8) ausgebildet ist, **dadurch gekennzeichnet, dass** sich die erste Trennfläche (7) und die zweite Trennfläche (8), im unbelasteten Zustand unter einer Umfangsvorspannung (14) in den Bereichen gebildet aus den beiden Intervallen 2 N - < 4 N und > 5 N - 20 N, in einem vorgebbaren Bereich derart berühren, sodass der Reibringkörper (4) in Form einer in Umfangsrichtung (U) geschlossenen Kontur mit einem kleinsten Umfang (13) ausgebildet ist.

2. Reibring nach Anspruch 1, wobei der Reibringkörper (4) in Umfangsrichtung (U) derart elastisch verformbar ist, dass ein Umfang des Reibrings (1) in Bezug auf den kleinsten Umfang (13) vergrösserbar ist.

3. Reibring nach einem der Ansprüche 1 oder 2, wobei die Trennstelle (5) unter einem vorgebbaren Trennwinkel (β) zur Umfangsrichtung (U) verläuft.

4. Reibring nach einem der Ansprüche 1 bis 3, wobei die Trennstelle (5) orthogonal zur Umfangsrichtung (U) verläuft.

5. Reibring nach einem der Ansprüche 1 bis 4, wobei die erste Trennfläche (7) in Form eines ersten Profils (15) und die zweite Trennfläche (8) in Form eines zweiten Profils (16) derart ausgebildet sind, dass das erste Profil (15) und das zweite Profil (16) so ineinandergreifen, dass die erste Trennfläche (7) und die zweite Trennfläche (8) in Richtung der Reibringachse (6) im Wesentlichen nicht gegeneinander verschiebbar sind.

6. Reibring nach Anspruch 5, wobei das erste Profil (15) und das zweite Profil (16) derart in Form eines Trennschlosses ausgebildet sind, dass der Umfang des Reibrings (1) in Bezug auf den kleinsten Umfang (13) auf einen vorgebbaren maximalen Umfang durch das Trennschloss begrenzt ist.

7. Reibring nach Anspruch 5 oder 6, wobei das erste Profil (15) als eine rechteckige Erhöhung und das zweite Profil (16) als eine rechteckige Vertiefung ausgebildet ist.

8. Reibring nach Anspruch 5 oder 6, wobei das erste Profil (15) als eine schwalbenschwanzförmige Erhöhung und das zweite Profil (16) als eine schwalbenschwanzförmige Vertiefung ausgebildet ist.

9. Reibring nach Anspruch 5 oder 6, wobei das erste Profil (15) als eine pfeilspitzförmige Erhöhung und das zweite Profil (16) als eine pfeilspitzförmige Vertiefung ausgebildet ist.

10. Reibring nach Anspruch 5 oder 6, wobei das erste Profil (15) als eine konvexe Erhöhung und das zweite Profil (16) als eine konkave Vertiefung ausgebildet ist.

11. Reibring nach Anspruch 5 oder 6, wobei das erste Profil (15) als eine kreisförmige Erhöhung und das zweite Profil (16) als eine kreisförmige Vertiefung ausgebildet ist.

12. Reibring nach einem der Ansprüche 1 bis 11, wobei der Reibring (1) ein Stahlstanzteil oder ein Blechumformteil ist.

13. Synchronisierungseinheit (3) für ein Zahnräderwechselgetriebe eines Fahrzeuges, umfassend einen Synchronring (2) und einen Reibring (1) nach einem der Ansprüche 1 bis 12.

14. Zahnräderwechselgetriebe für ein Fahrzeug, insbesondere für einen Personenkraftwagen, einen Transporter oder ein Lastkraftwagen mit einer Synchronisierungseinheit (3) nach Anspruch 13.

## Claims

1. Friction ring (1) for a synchronization unit (3) of a gear changing transmission comprising a conical friction ring body (4) having an inner friction surface (401) and an outer installation surface (402) which each bound the friction ring body (4) in a radial direction extending perpendicular to an axial friction ring axis (6), wherein the inner friction surface (401) extends at a predefinable friction angle (α₁) and the outer installation surface (402) extends at a predefinable installation angle (α₂) conically along the friction ring axis (6), and the friction ring body (4) is interrupted in a circumferential direction (U) extending around the friction ring axis (6) by a separation point (5) in such a way that a first separation surface (7) and a second separation surface (8) are formed at the separation point (5), **characterized in that** the first separation surface (7) and the second separation surface (8), in the unloaded state under a circumferential preload (14) in the ranges formed by the two intervals 2 N - < 4 N and > 5 N - 20 N, contact each other in a predefinable area in such a way that the friction ring body (4) is shaped in the form of a closed contour in the circumferential direction (U) with a smallest circumference (13).

2. Friction ring according to claim 1, wherein the friction ring body (4) can be deformed elastically in the circumferential direction (U) in such a way that a circumference of the friction ring (1) in relation to the smallest circumference (13) can be increased.

3. Friction ring according to one of the claims 1 or 2, wherein the separation point (5) extends at a predefinable separation angle (β) to the circumferential direction (U).

4. Friction ring according to one of the claims 1 to 3, wherein the separation point (5) extends orthogonally to the circumferential direction (U).

5. Friction ring according to one of the claims 1 to 4, wherein the first separation surface (7) is shaped in the form of a first profile (15) and the second separation surface (8) is shaped in the form of a second profile in such a way that the first profile (15) and the second profile (16) engage with one another so that the first separation surface (7) and the second separation surface (8) cannot essentially be displaced against each other in the direction of the friction ring axis (6).

6. Friction ring according to claim 5, wherein he first profile (15) and the second profile (16) are shaped in the form of a separating lock in such a way that the circumference of the friction ring (1) in relation to the smallest circumference (13) is limited by the separating lock to a predefinable maximum circumference.

7. Friction ring according to claim 5 or 6, wherein the first profile (15) is shaped as a rectangular projection and the second profile (16) is shaped as a rectangular recess.

8. Friction ring according to claim 5 or 6, wherein the first profile (15) is shaped as a projection having the form of a dovetail and the second profile (16) is shaped as a recess having the form of a dovetail.

9. Friction ring according to claim 5 or 6, wherein the first profile (15) is shaped as a projection having the form of an arrowhead and the second profile (16) is shaped as a recess having the form of an arrowhead.

10. Friction ring according to claim 5 or 6, wherein the first profile (15) is shaped as a convex projection and the second profile (16) is shaped as a concave recess.

11. Friction ring according to claim 5 or 6, wherein the first profile (15) is shaped as a circular projection and the second profile (16) is shaped as a circular recess.

12. Friction ring according to one of the claims 1 to 11, wherein the friction ring (1) is a stamped steel part or a shaped sheet metal part.

13. Synchronization unit (3) for a gear changing transmission of a vehicle comprising a synchronizer ring (2) and a friction ring (1) according to one of the claims 1 to 12.

14. Gear changing transmission for a vehicle, in particular for a passenger vehicle, a transporter or a truck having a synchronization unit (3) according to claim 13.

## Revendications

1. Anneau de friction (1) pour une unité de synchronisation (3) d'une boîte de vitesse à roues dentées, comprenant un corps d'anneau de friction (4) conique ayant une surface de friction intérieure (401) et une surface d'installation extérieure (402), qui délimitent chacune le corps d'anneau de friction (4) dans une direction radiale s'étendant perpendiculairement à un axe de l'anneau de friction axial (6), dans lequel la surface de friction intérieure (401) s'étend selon un angle de friction (α₁) prédéterminable et la surface d'installation extérieure (402) s'étend selon un angle d'installation (α₂) prédéterminable de manière conique le long de l'axe de l'anneau de friction (6), et le corps d'anneau de friction (4) est interrompu dans une direction circonférentielle (U) s'étendant autour de l'axe de l'anneau de friction (6) par un point de séparation (5) de telle sorte qu'une première surface de séparation (7) et une deuxième surface de séparation (8) sont formées au niveau du point de séparation (5), **caractérisé en ce que** la première surface de séparation (7) et la deuxième surface de séparation (8), à l'état déchargé sous une précharge circonférentielle (14) dans les plages formées par les deux intervalles 2 N - < 4 N et > 5 N - 20 N, se touchent dans une zone prédéterminable de telle sorte que le corps de d'anneau de friction (4) est conçu sous la forme d'un contour fermé dans la direction circonférentielle (U) avec une plus petite circonférence (13).

2. Anneau de friction selon la revendication 1, dans lequel le corps d'anneau de friction (4) est déformable élastiquement dans la direction circonférentielle (U) de telle sorte qu'une circonférence de l'anneau de friction (1) peut être agrandie par rapport à la plus petite circonférence (13).

3. Anneau de friction selon l'une des revendications 1 ou 2, dans lequel le point de séparation (5) s'étend selon un angle de séparation (β) prédéterminable par rapport à la direction circonférentielle (U).

4. Anneau de friction selon l'une des revendications 1 à 3, dans lequel le point de séparation (5) s'étend orthogonalement par rapport à la direction circonférentielle (U).

5. Anneau de friction selon l'une des revendications 1 à 4, dans lequel la première surface de séparation (7) est conçue sous la forme d'un premier profil (15) et la deuxième surface de séparation (8) est conçue sous la forme d'un deuxième profil (16) de telle sorte que le premier profil (15) et le deuxième profil (16) s'engagent l'un dans l'autre de telle sorte que la première surface de séparation (7) et la deuxième surface de séparation (8) ne peuvent pas être essentiellement déplacées l'une contre l'autre dans la direction de l'axe de l'anneau de friction (6).

6. Anneau de friction selon la revendication 5, dans lequel le premier profil (15) et le deuxième profil (16) sont conçus sous la forme d'un verrouillage de séparation de telle sorte que la circonférence de l'anneau de friction (1) est limitée par rapport à la plus petite circonférence (13) à une circonférence maximale prédéterminable par le verrouillage de séparation.

7. Anneau de friction selon la revendication 5 ou 6, dans lequel le premier profil (15) est conçu sous la forme d'une élévation rectangulaire et le deuxième profil (16) est conçu sous la forme d'un creux rectangulaire.

8. Anneau de friction selon la revendication 5 ou 6, dans lequel le premier profil (15) est conçu sous la forme d'une élévation en queue d'aronde et le deuxième profil (16) est conçu sous la forme d'un creux en queue d'aronde.

9. Anneau de friction (1) selon la revendication 5 ou 6, dans lequel le premier profil (15) est conçu sous la forme d'une élévation en forme de pointe de flèche et le deuxième profil (16) est conçu sous la forme d'un creux en forme de pointe de flèche.

10. Anneau de friction (1) selon la revendication 5 ou 6, dans lequel le premier profil (15) est conçu sous la forme d'une élévation convexe et le deuxième profil (16) est conçu sous la forme d'un creux concave.

11. Anneau de friction (1) selon la revendication 5 ou 6, dans lequel le premier profil (15) est conçu sous la forme d'une élévation circulaire et le deuxième profil (16) est conçu sous la forme d'un creux circulaire.

12. Anneau de friction selon l'une des revendications 1 à 11, dans lequel l'anneau de friction (1) est une pièce découpée en acier ou une pièce formée en tôle.

13. Unité de synchronisation (3) pour une boîte de vitesse à roues dentées d'un véhicule, comprenant un anneau de synchronisation (2) et un anneau de friction (1) selon l'une des revendications 1 à 12.

14. Boîte de vitesse à roues dentées pour un véhicule, en particulier pour un véhicule de tourisme, un transporteur ou un camion, ayant une unité de synchronisation (3) selon la revendication 13.
